(19) Europäisches Patentamt
European Patent Office
Office européen des brevets

(11) **EP 1 389 921 B1**

(12) **EUROPEAN PATENT SPECIFICATION**

(45) Date of publication and mention of the grant of the patent:
**10.11.2010   Bulletin 2010/45**

(21) Application number: **02769111.2**

(22) Date of filing: **03.05.2002**

(51) Int Cl.:
*A23J 1/14* *(2006.01)*       *A23J 3/14* *(2006.01)*

(86) International application number:
**PCT/CA2002/000651**

(87) International publication number:
**WO 2002/089598 (14.11.2002 Gazette 2002/46)**

(54) **CANOLA PROTEIN ISOLATE FUNCTIONALITY I**

CANOLAPROTEINISOLAT-FUNKTION I

FONCTIONNALITE I DE L'ISOLAT PROTEIQUE DE CANOLA

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.05.2001   US 288434 P**
**29.10.2001   US 330731 P**

(43) Date of publication of application:
**25.02.2004   Bulletin 2004/09**

(73) Proprietor: **Burcon Nutrascience (MB) Corp.**
**Vancouver,**
**British Columbia V6J 1Z2 (CA)**

(72) Inventor: **MURRAY, E., Donald**
**Eden Mills, Ontario N0B 1P0 (CA)**

(74) Representative: **Smart, Peter John**
**Beck Greener**
**Fulwood House**
**12 Fulwood Place**
**London**
**WC1V 6HR (GB)**

(56) References cited:
**US-A- 4 029 825     US-A- 4 366 097**
**US-A- 4 418 013     US-A- 6 005 076**

• **MURRAY, D.: "Rapeseed: a potential source of high quality plant protein" ASIA PACIFIC FOOD INDUSTRY, April 2001 (2001-04), pages 30-34, XP002207606**

**Description**

REFERENCE TO RELATED APPLICATIONS

This application claims priority under 35 USC 119(e) from copending US Patent Applications Nos. 60/288,434 filed May 4, 2001 and 60/330,731 filed October 29, 2001.

FIELD OF INVENTION

The present invention relates to a canola protein isolate and its functionality in a wide range of applications.

BACKGROUND TO THE INVENTION

In US Patent Nos. 5,844,086 and 6,005,076 ("Murray II"), assigned to the assignee hereof, there is described a process for the isolation of protein isolates from oil seed meal having a significant fat content, including canola oil seed meal having such content. The steps involved in this process include solubilizing proteinaceous material from oil seed meal, which also solubilizes fat in the meal and removing fat from the resulting aqueous protein solution. The aqueous protein solution may be separated from the residual oil seed meal before or after the fat removal step. The defatted protein solution then is concentrated to increase the protein concentration while maintaining the ionic strength substantially constant, after which the concentrated protein solution may be subjected to a further fat removal step. The concentrated protein solution then is diluted to cause the formation of a cloud-like mass of highly aggregated protein molecules as discrete protein droplets in micellar form. The protein micelles are allowed to settle to form an aggregated, coalesced, dense amorphous, sticky vital wheat gluten-like protein isolate mass, termed "protein micellar mass" or PMM, which is separated from residual aqueous phase and dried.

The protein isolate has a protein content (as determined by Kjeldahl Nx 6.25) of at least about 90%, is substantially undenatured (as determined by differential scanning calorimetry) and has a low residual fat content. The yield of protein isolate obtained using this procedure, in terms of the proportion of protein extracted from the oil seed meal which is recovered as dried protein isolate was generally less than 40%, typically around 20%.

The procedure described in the aforementioned patents was developed as a modification to and improvement on the procedure for forming a protein isolate from a variety of protein source materials, including oil seeds, as described in USP 4,208,323 (Murray IB). The oil seed meals available in 1980, when USP 4,208,323 issued, did not have the fat contamination levels of canola oil seed meals, and, as a consequence, the procedure of US Patent No. 4,208,323 cannot produce from the current oil seed meals processed according to the Murray II process, proteinaceous materials which have more than 90% protein content. There is no description of any specific experiments in USP 4,208,303 carried out using rapeseed (canola) meal as the starting material.

USP 4,208,323 itself was designed to be an improvement on the process described in US Patents Nos. 4,169,090 and 4,285,862 (Murray IA) by the introduction of the concentration step prior to dilution to form the PMM. The latter step served to improve the yield of protein isolate from around 20% for the Murray IA process.

In copending United States Patent Applications Nos. 60/288,415 filed May 4, 2001, 60/326,987 filed October 5, 2001, 60/331,066 filed November 3, 2001 and 60/333,494 filed November 26, 2001, assigned to the assignee hereof, there are described further improvements on these prior art protein isolation procedures as they apply to oil seeds to obtain improved yields of dried isolated product protein in terms of the proportion of the protein extracted from the oil seeds which is recovered as protein isolate and to obtain protein isolate of high purity of at least 100% at a Kjeldahl nitrogen (N) conversion rate of Nx 6.25. This procedure is employed particularly to produce a canola protein isolate.

In the procedures described in the aforementioned US Patent Applications Nos. 60/288,415, 60/326,987, 60/331,066 and 60/333,494; the oil seed meal is extracted with an aqueous food grade salt solution at a temperature of at least about 5°C to cause solubilization of protein in the oil seed meal and to form an aqueous protein solution having a protein content of about 5 to about 30 g/L and a pH of about 5 to about 6.8. The resulting protein extract solution, after an initial treatment with pigment adsorbing agent, if desired, is reduced in volume using ultrafiltration membranes to provide a concentrated protein solution having a protein content in excess of about 200 g/L. The concentrated protein solution then is diluted into chilled water having a temperature below about 15°C, resulting in the formation of a white cloud of protein micelles which are allowed to settle to form an amorphous, sticky, gelatinous, gluten-like micellar mass. Following removal of the supernatant, the precipitated, viscous sticky mass (PMM) is dried to provide the canola protein isolate.

In copending United States Patent Application No. 60/331,646 assigned to the assignee hereof, there is described a continuous process for making canola protein isolates. In accordance therewith, canola oil seed meal is continuously mixed with a food grade salt solution, the mixture is conveyed through a pipe while extracting protein from the canola oil seed meal to form an aqueous protein solution, the aqueous protein solution is continuously separated from residual canola oil seed meal, the aqueous protein solution is continuously conveyed through a selective membrane operation to increase the protein content of the aqueous protein solution to at least about 200 g/L while maintaining the ionic strength substantially constant, the resulting concentrated protein solution is continuously mixed with chilled water to cause the formation of protein micelles, and the protein micelles are continuously permitted to settle while the supernatant is continuously overflowed until the desired amount of PMM has accumulated in the settling vessel. The PMM is removed from the settling vessel and may be dried. The PMM has a protein content of at least 100 wt% as determined by Kj eldahl nitrogen (Nx 6.25).

SUMMARY OF INVENTION

It has now been found that the high purity canola protein isolate produced by the procedure of the aforementioned pending United States patent applications has broadly based functionality in food products, unique among proteinaceous materials. The ability to utilize a protein which is vegetable in origin in food products enables truly vegetarian food products to be provided in instances where egg white and/or animal-derived protein have been used in the absence of any available substitute.

Accordingly, in one aspect of the present invention, there is provided a process of forming a food composition, which comprises:

extracting canola oil seed with an aqueous food-grade salt solution at a temperature of at least 5 °C to cause solubilisation of protein in the canola oil seed meal and to form an aqueous protein solution having a protein content of 5 to 30 gl$^{-1}$ and a pH of 5 to 6.8;

reducing the volume of the aqueous protein solution using ultrafiltration membranes to provide a concentrated protein solution having a protein content in excess of 200 gl$^{-1}$; diluting the concentrated protein solution into chilled water having a temperature below 15 °C to form a cloud of protein micelles;

settling the protein micelles to form an amorphous, sticky, gelatinous, gluten-like micellar mass;

removing the supernatant;

drying the precipitated viscous sticky mass to provide a substantially undenatured canola protein isolate having a protein content of at least 100 wt% as determined by Kjeldahl nitrogen x 6.25;

providing a food composition comprising a foodstuff and said substantially undenatured canola protein isolate as a component providing functionality in said food composition.

Preferably, said protein isolate contributes to the food composition as soluble protein or to provide foaming, film forming, water binding, cohesion, thickening, gelation, elasticity, emulsification, fat binding or fibre forming functionality.

Preferably, said protein isolate is incorporated in said food composition in substitution for egg white, milk protein, whole egg, meat fibres, or gelatin.

The canola protein isolate may be used in conventional applications of protein isolates, such as protein fortification of processed foods, emulsification of oils, body formers in baked foods and foaming agents in products which entrap gases. The canola protein isolate also has functionalities not exhibited by the source material and isoelectric precipitates. The canola protein isolate has certain functionalities in common with the products described in the prior art Murray I patents, including the ability to be formed into protein fibers and the ability to be used as an egg white substitute or extender in food products where egg white is used as a binder. As described herein, the canola protein isolate provided herein has other functionalities.

Protein functionality can be categorized into several properties. The following Table I lists these functionalities, food products wherein such protein functionality is provided and protein commonly employed for such purpose:

TABLE I

| Property | Food Product | Protein |
|---|---|---|
| 1.Solubility | Beverages | Egg and whey proteins |
| 2.Viscosity | Dressings,deserts | Gelatin |
| 3.Water binding | Sausages,cakes | Meat protein, egg protein |
| 4.Gelation | Yoghurts,desserts,cheese | Egg & milk proteins, gelatin |

(continued)

| Property | Food Product | Protein |
|---|---|---|
| 5.Cohesion/adhesion | Meats, sausage, pasta | Egg and whey proteins |
| 6.Elasticity | Meats, baked goods | Egg and whey proteins, meat proteins |
| 7.Emulsification | Sausages, dressings | Egg and milk proteins |
| 8. Foaming | Toppings, nougats, ice cream | Egg and milk proteins |
| 9. Fat binding | Baked goods, doughnuts | Egg and milk proteins, gluten |
| 10. Film forming | Buns and breads | Egg protein, gluten |
| 11. Fiber forming | Meat analogs | Meat protein |
| (* This Table I is derived in part from Food Chemistry, Marcel Dekker, Inc. Ed. Owen Fennema, 1996, page 366). | | |

As may be seen from Table I, egg protein has a wide scope of functionality but not as broad as the canola protein isolate of the present invention. However, the canola protein isolate may be utilized in each of these applications to replace the protein commonly used to provide the specific functional properties. In general, the canola protein isolate can replace or extend the existing protein product, while providing the desired functionality, especially for vegetarian and near-vegetarian type products, much more cheaply. In addition, the canola protein isolate has a high quality amino acid profile and does not possess detrimental flavour characteristics nor nutritional factors which would adversely affect its employment in food product applications.

In the functionalities recited in Table I, certain ones are similar and possibly complementary, so that the functionalities can be classified in categories, as follows:

| Group | Categories |
|---|---|
| A | #8 Foaming and #10 Film Forming |
| B | #1 Solubility and #3 Water Binding |
| C | #5 Cohesion/Adhesion |
| D | #2 Viscosity (thickening), #4 Gelation and #6 Elasticity |
| E | #7 Emulsification and #9 Fat Binding |
| F | #11 Fiber Forming |

GENERAL DESCRIPTION OF INVENTION

Solubility:

As noted above, one of the functions possessed by the canola protein isolate is solubility in aqueous media, such as water. The canola protein isolate is highly soluble in water in the presence of sodium chloride, being less so in the absence of sodium chloride. Milk is a protein dispersion containing about 4 wt% protein dispersed in the aqueous phase. Liquid egg white, used in a variety of food applications, contains about 10 wt% egg proteins.

An example where such protein function may be employed, at the appropriate concentration, is in a protein beverage.

Viscosity:

As noted above, one of the functions possessed by the canola protein isolate is the ability to act as a thickening agent for increasing viscosity in various food products. The canola protein isolate may be used as a replacement for gelatin and xanthan gums commonly used for this purpose in, for example, dressings, sauces and desserts, such as Jello® pudding

Water binding:

Water binding properties of proteins are used in sausages and cakes to retain moisture in the cooked product. The canola protein isolate can be used to replace, partially or completely, the egg and animal-derived proteins commonly used for this purpose in these products.

Gelation:

The gelation properties of proteins is used in yoghurts, desserts and cheese as well as in various meat analogs, such as a bacon analog. Egg and milk proteins as well as gelatin, commonly used for this purpose, may be replaced, partially or completely, by the canola protein isolate provided herein.

Cohesion/Adhesion:

A variety of meats, sausages and pasta utilize egg protein and/or whey protein for these properties in their formulation to bind food components together and then to become coagulated upon being heated. The canola protein isolate can replace, partially or completely, such commonly used proteins and provide the required functions.

One application of these properties is a veggie burger, where egg white, commonly used to provide cohesion/adhesion of a ground-meat replacement, can be replaced by the canola protein isolate. Other possibilities are meat loaf and meat balls, again as a replacement for egg protein.

Elasticity:

The canola protein isolate can replace, partially or completely, the egg and meat proteins in meats used for these purposes. An example of the replacement of meat is in a veggie burger.

Emulsification:

Egg white, egg yolk and milk proteins are commonly used in sausages, meat analogs, simulated adipose tissue, and salad dressings for this property to achieve emulsification of fats and oils present in such products. The canola protein isolate may be used as a replacement, partially or completely, for the egg and milk proteins to provide the property.

Foaming:

The foaming properties of egg white and milk protein to provide a stable aerated structure, used in such products as nougats, macaroons and meringues, may be reproduced by utilization of the canola protein isolate.

Fat binding:

Egg and milk proteins have commonly been used in baked goods and doughnuts for fat binding properties. The canola protein isolate can replace such materials, partially or completely, and provide the required property. Such property may be employed in cookie mixes.

Film forming:

The canola protein isolate can be used for its film-forming properties in providing glazes for breads and buns.

Fiber forming:

The canola protein isolate can be formed into protein fibres by a fiber forming procedure, such as described in US Patents Nos. 4,328,252, 4,490,397 and 4,501,760. Such protein fibers may be used for their chewy texture in a variety of meat analogs, such as a meat snack analog, meatless breakfast sausage, a bacon analog, simulated adipose tissue, and a seafood analog, such as shrimp and crabmeat analogs, as well as other food products.

The canola protein isolate, therefore, provides a replacement for a variety of food ingredients (both proteinaceous and non-proteinaceous) to provide a broad spectrum of functionality not previously observed. The canola protein isolate replaces egg white, egg yolk, soy protein, xanthan gum, gelatin and milk protein in a variety of food products. The canola protein isolate is bland and does not need to be used with strong flavours or spices.

In the Examples which follow specific application of the wide functionality of the canola protein isolate is exemplified.

EXAMPLES

The invention is illustrated by the following Examples:

Example 1:

This Example illustrates the preparation of canola protein isolate samples for testing functionalities of the protein. This procedure is in accordance with the aforementioned US Patent Application No. 60/288,415 filed May 4, 2001.

'a' kg of commercial canola meal was added to 'b' L of 0.15 M NaCl solution at ambient temperature, agitated 'c' minutes to provide an aqueous protein solution having a protein content of 'd' g/L. The residual canola meal was removed and washed on a vacuum filter belt. The resulting protein solution was clarified by centrifugation to produce a clarified protein solution having a protein content of 'e' g/L followed by the addition of 'k' wt% powdered activated carbon (PAC).

The protein extract solution from the PAC treatment step was reduced in volume on an ultrafiltration system. The resulting concentrated protein solution had a protein content of 'f' g/L.

The concentrated solution at 'g' °C was diluted 1: 'h' into 4°C tap water. A white cloud formed immediately and was allowed to settle. The upper diluting water was removed and the precipitated, viscous, sticky mass was dried. The dried protein which was formed had a protein content of 'i' % protein (Nx6.25 d.b.). The product was given designation CPI 'j'.

The specific parameters "a" to "k" for these different samples of protein product are set forth in the following Table II:

TABLE II

| j | a | b | c | d | e | f | g | h | i | k |
|---|---|---|---|---|---|---|---|---|---|---|
| A07-15 | 150 | 1000 | 30 | 14.0 | 13.1 | 246 | 30 | 10 | 103.5 | 2 |
| A07-22 | 150 | 100 | 120 | 13.0 | 12.3 | 490 | 20 | 5 | 106.9 | 4 |
| A08-02 | 300 | 2000 | 300 | 14.0 | 14.5 | 421 | 20 | 5 | 105.8 | 0.06 |
| A10-13 | 300 | 2000 | 45 | 28.6 | 24.9 | 176 | 20 | 10 | 109.2 | 1 |

Example 2:

This Example further illustrates the preparation of canola protein isolate samples for testing functionalties.

'a' kg of commercial oil seed meal was added to 'b' L of 0.15 M NaCl solution at ambient temperature and agitated for 30 minutes at 13°C to provide an aqueous protein solution having a protein content of 'c' g/L. the residual canola meal was removed and washed on a vacuum filter belt. The resulting protein solution was clarified by centrifugation to produce a clarified solution having a protein content of 'd' g/L.

The clarified protein solution or a 'e' aliquot of, the clarified protein solution was reduced in volume on an ultrafiltration system using a 'f' dalton molecular weight cut-off membrane. The resulting concentrated protein solution had a protein content of 'g' g/L (The product was given designation 'h').

50 ml retentate aliquots of BW-AL011-J16-01 were warmed to 30°C before being diluted 1:10 into 4°C water. In each case, a white cloud, immediately formed and was allowed to settle. The upper diluting water was removed and the precipitated, viscous, sticky mass (PMM) was dried. The protein recovery was 57.1 wt% and protein content was 101.6 wt% protein (Nx 6.25).

The parameters 'a' to 'h' are outlined in the following Table III:

TABLE III

| h | BW-AL011-J16-01 | AL016-L10-01A |
|---|---|---|
| a | 1200 | 50 |
| b | 8000 | 1000 |
| c | 24.4 | 18.9 |
| d | 20.3 | 13.2 |
| e | (1) | 400 |
| f | 3000 | 10000 |

(continued)

| h | BW-AL011-J16-01 | AL016-L10-01A |
|---|---|---|
| g | 287 | 174.7 |

Note: (1) All the protein extract solution was concentrated.

The concentrated solution for BW-AL016-L10-01A at 30°C was diluted 1:15 into 4°C water. A white cloud immediately formed and was allowed to settle. The upper diluting water was removed and the precipitated, viscous, sticky mass (PMM) was recovered from the bottom of the vessel in a yield of 23.5 wt% of the extracted protein are dried. The dried protein was formed to have a protein content of 111.8 wt% (Nx 6.25) d.b.

Example 3:

This Example illustrates the foaming properties of the canola protein isolate.

Samples of canola protein isolate A07-15 prepared following the procedure of Example 1 were tested for their ability to form a foam and the stability of any foam which is formed. A 20 g sample of dried canola protein isolate was rehydrated in 30 ml water for 9 minutes and then an additional 133.5 ml of water was added to the mixing bowl along with 120 g of sugar and 1.5 g of citric acid and mixed for 30 seconds at low speed followed by 10 minutes of whipping at medium speed. The resulting foam was white, shiny and very thick/stiff and had an appearance essentially the same as an egg white control mix.

The foam was evaluated for brightness (L) and chromaticity (a and b) using a Minolta colorimeter. In the L a b colour space, the value moves from 0 to 100, with 100 being white and 0 being black. The chromaticity coordinates, a and b, both have maximum values of + 60 and -60, +a being the red direction, -a being the green direction, +b being the yellow direction and -b being the blue direction. Colour values for the foam were: L:91.97, a:1.27 and b:5.19.

The foam was stable for at least four hours at room temperature and, after freezing overnight and subsequent thawing, the foam was very stable with only a few drops of liquid appearing on the bottom of the clear holding vessel. The foam volume and stability obtained are in the same range as egg white protein in a parallel experiment.

Example 4:

This Example illustrates the use of the foaming properties of the canola protein isolate in forming a nougat.

The foaming properties of the canola protein isolate as demonstrated in Example 3 were further illustrated by the preparation of a nougat soft textured protein bar. Nougats are normally comprised of sugars, syrups and whipping agents, commonly egg white. In this Example, canola protein isolate was used to replace the egg white commonly employed. The nougat contained the ingredients in their respective proportions by weight set forth in the following Table IV:

TABLE IV

| | |
|---|---|
| Canola Protein isolate | 3.7% |
| Granulate white sugar | 50.9% |
| Glucose (65 dextrose equivalent) | 25.0% |
| Water | 17.2% |
| Chocolate powder [1] | 2.8% |
| Citric acid | 0.4% |

[1] Chocolate Powder contained 55% cocoa powder, 10% white sugar and 35% skim milk powder.

The sugar and part of the glucose (18.0%) were mixed with part of the water (9.9%) and boiled at 135°C to form a hot syrup. A separate composition containing the canola protein isolate was mixed with the remaining water (7.3%) followed by the remaining glucose (7.0%) plus the citric acid. These materials were whipped at medium speed for 4 minutes. The hot syrup, cooled to 93°C, was added slowly to the canola protein isolate mix with continuous whipping at medium speed for an additional 1 minute. The chocolate powder was folded in at the end of this mixing period.

The resulting chocolate flavoured nougat had a short, dry, airy structure, very similar to a commercial nougat made using egg white. This material, in the shape of a protein bar, was then enrobed in liquid chocolate. Higher protein concentrations were achieved by increasing the amount of canola protein isolate in each bar.

Example 5:

This Example illustrates the use of the foaming properties of the canola protein isolate in forming a macaroon.
The foaming properties of the canola protein isolate as demonstrated in Example 3 were further illustrated by the preparation of a macaroon as a replacement for egg white commonly used in such products. The macaroon contained the ingredients set forth in the following Table V:

TABLE V

| Ingredient | % by weight |
|---|---|
| Canola protein isolate | 3.6 |
| Granulate white sugar | 43.5 |
| Shredded sweetened coconut | 23.4 |
| Corn starch | 1.1 |
| Vanilla | 0.3 |
| Citric acid | 0.5 |
| Water | 27.6 |

A small portion of water (3.6%) plus the citric acid were used to rehydrate the canola protein isolate powder until a paste-like structure was formed, which was allowed to sit for 15 minutes. The rehydrated material was added to a mixing bowl along with the remaining water and then mixed slowly for 30 seconds. The sugar and starch were then added gradually to the whipped canola protein isolate and mixing continued for 2.5 minutes. Finally the coconut and vanilla were folded into the bowl and mixing continued for an additional 1 minute. After mixing was completed, approximately 35 ml aliquots of the mix were dropped onto a baking sheet and baked in an oven at 135°C for 35 minutes.
The initial stiff macaroon whipped structure was held on heating (i.e. it did not collapse) and it was crispy and light to the bite with a clean taste possessing no adverse flavour characters. The product colour was white, typical of a control whipped/aerated egg white structure where an equivalent amount of liquid egg white albumen was used in place of the rehydrated canola protein isolate.

Example 6:

This Example illustrates the utilization of the canola protein isolate in a light candy nougat bars.
The foaming properties of the canola protein isolate as demonstrated in Example 3 were further illustrated by the preparation of a light candy nougat bar as a replacement for egg white commonly used in such products, in this case using CPI A07-22 as the canola protein isolate. The preparation of CPI A07-22 is described in Example 1. The light candy nougat bar contained the ingredients set forth in the following Table VI: TABLE VI

| Ingredient | Weight (g) | Percentage (%) |
|---|---|---|
| Sugar | 655.6 | 47.7 |
| Corn syrup, light | 338.4 | 24.6 |
| Water | 226.3 | 16.5 |
| Protein A07-22 | 11.7 | 0.9 |
| Hydration Water | 85.5 | 6.2 |
| Chocolate chips | 56.7 | 4.1 |
| Salt | 0.5 | 0.04 |
| Total | 1374.7 | 100.0 |

Canola protein isolate, protein, 50% of the water and salt were whipped for 1 minute at speed 1 then 3 minutes at speed 3 using a whisk attachment in a Hobart mixing bowl and refrigerated until required. A rubber spatula, the inside of a large saucepan, and a cake pan were coated with PAM spray. The sugar, corn syrup and the remainder of the water were added to the saucepan and the mixture brought to a boil over heat 5. The mixture was covered and boiled for 3 minutes. The cover was removed and the sides of the saucepan were washed down using a pastry brush dipped in cool water. Cooking and stirring were continued until a temperature of 270°F (130°C) was reached. The temperature was measured by tilting the pot and measuring the temperature of the solution.

The saucepan was removed from heat and the solution in the saucepan was cooled on a cooling rack to 260°F (127°C). The hot mixture was poured over the beaten protein mixture while blending using the paddle attachment at speed 1 for 3 minutes. Blending of the mixture was continued for an additional 16 minutes.

Chocolate chips were added while blending for 1 minute at speed 1 to permit the chips to melt into mixture. The mixture was transferred to the cake pan and molded flat to ¾ inch height and frozen. The frozen sheet was cut into squares and frozen on a baking sheet. The frozen nougat squares were placed in a freezer bag for storage.

The nougat appeared creamy and caramel coloured. The texture was smooth, chewy and soft. The nougat had a sweet taste and no off odours and a clean taste.

Example 7:

This Example illustrates the utilization of the canola protein isolate in a baked meringue.

The foaming properties of canola protein isolate used further illustrated by the preparation of a baked meringue as a replacement for egg white conventionally used in such products. The canola protein isolate used was CPI A07-22, prepared as described in Example 1.

The baked meringue contains the ingredients set forth in the following Table VII:

TABLE VII

| Ingredient | Weight (g) | Percentage (%) |
|---|---|---|
| PMM A07-22 | 11.6 | 3.5 |
| Hydration water | 85.2 | 26.0 |
| Salt | 0.4 | 0.1 |
| Sugar (1) | 161.7 | 49.3 |
| Sugar (2) | 55.3 | 17.0 |
| Cornstarch | 8.9 | 2.7 |
| Lemon juice | 4.7 | 1.4 |
| Total | 327.8 | 100.0 |

Hydration water at room temperature was added to protein and salt in a Hobart mixer bowl and the protein was wet and dispersed by gently mixing with a fork. The protein was allowed to hydrate for 15 minutes at room temperature. The hydrated protein then was whisked at speed 3 for 2.5 minutes. Sugar (1) was added gradually while mixing at speed 3 for 2 minutes. The sides of the bowl were then scraped. The mixture was blended for an additional 2 minutes. Sugar (2) and cornstarch were preblended using a fork and the dry blend and lemon juice were gently folded into the protein mixture using a rubber spatula (20 times). The mixture was transferred to a piping bag and piped onto parchment lined baking sheets. The piped material was baked at 200°F (93°C) for 3 hours. The oven was turned off and the meringues were left overnight with the oven light on.

The baked meringue exhibited a crisp, light aerated texture. The flavour of the meringues was sweet and exhibited no negative flavour characters.

Example 8:

This Example illustrates the utilization of the canola protein isolate in a beverage formulation, namely a smoothie, as a replacement for gelatin and/or milk protein.

A smoothie was prepared using canola protein isolate CPI A07-22. The smoothie contains the ingredients set forth in the following Table VIII:

TABLE VIII

| Ingredient | Wt. g | Wt. % |
|---|---|---|
| PMM A07-22 | 12.5 | 4.5 |

(continued)

| Ingredient | Wt. g | Wt. % |
|---|---|---|
| Crystalline sucrose | 11.5 | 4.2 |
| Xanthan Gum | 0.4 | 0.1 |
| Lecigran 570 | 0.6 | 0.2 |
| V8 Berry Blend | 250.0 | 91.0 |
| Total | 275.0 | 100.0 |

Protein, sugar, lecigran and gum were manually blended. 4 tablespoons of V8 (Trademark) Berry Blend were added to an Osterizer mixer. The protein dry mixture was added to the Osterizer, followed by the remaining V8 Berry Blend. The blender was placed at the highest setting for 15 seconds, the sides were scraped, as the contents blended for an additional 15 seconds. The mixture was poured into a cup and evaluated.

The resulting protein beverage was red-orange in colour and had a fruity flavour with no negative flavour characters. The texture was creamy and frothy.

Example 9:

This Example illustrates the utilization of the canola protein isolate in a trail mix cookie in replacement of the whole egg conventionally employed and illustrating fat binding properties.

Trail mix cookies were prepared from the formulation set forth in the following Table IX:

TABLE IX

| Ingredient | Weight (g) | Percentage (%) |
|---|---|---|
| White Sugar | 104.6 | 11.3 |
| Brown Sugar | 88.3 | 9.6 |
| Chunky Peanut Butter | 208.5 | 22.6 |
| Margarine | 50.3 | 5.4 |
| Vanilla | 2.9 | 0.3 |
| Canola Protein Isolate A10-13 or A07-22 | 12.5 | 1.4 |
| Water | 91.6 | 9.9 |
| Rolled Oats | 241.3 | 26.2 |
| Baking Soda | 4.8 | 0.5 |
| Salt | 1.1 | 0.1 |
| Chocolate Chips | 70.6 | 7.7 |
| Raisins | 46.3 | 5.0 |
| Total | 922.8 | 100.0 |

White sugar, brown sugar and canola protein isolate powder were blended in a Hobart bowl mixer. Peanut butter and margarine were added and blended for 1.5 min. on speed 1. Vanilla and water were added next and blended for 1 min. on speed 1. The rolled oats, salt and baking soda were preblended and added to the Hobart bowl. The mixture was blended for 1 min on speed 1. Chocolate chips and raisins were added and blended for 30 sec. on speed 1. The blend was dropped by a tablespoon onto an ungreased non-stick baking pan. An oven was preheated to 350°F (175°C) and the cookies baked for 16 minutes in the oven.

The trail mix cookies had a golden brown colour and a chunky, wholesome appearance. The texture was chewy, soft and moist. No off colour nor off flavours were detected.

Example 10:

This Example illustrates the utilization of the canola protein isolate in the preparation of glazed hot cross buns in place of the egg white conventionally employed and illustrating film-forming properties.

Glazed hot cross buns were prepared from the formulation set forth in the following Table X:

TABLE X

| Bun Formulation | | |
|---|---|---|
| Ingredient | Batch Produced (g) | Percentage (%) |
| Dawn Hot Cross Bun Mix | 340.8 | 49.5 |
| Water (tap) | 170.4 | 24.8 |
| Yeast (instant rising) | 6.3 | 0.9 |
| Currants | 85.2 | 12.4 |
| Mixed Fruit (glace cake mix) | 85.2 | 12.4 |
| Total | 687.9 | 100.0 |
| Glaze Formulation | | |
| Ingredient | Batch Produced (g) | Percentage (%) |
| Canola Protein Isolate A8-02 | 12.0 | 21.3 |
| Salt | 0.3 | 0.7 |
| Water | 44.0 | 78.0 |
| Total | 56.3 | 100.0 |

The hot cross bun mix, yeast and water were placed in a Hobart bowl mixer and mixed with the paddle attachment at speed 1 for 3 minutes. The dough was kneaded on a cutting board until firm and elastic, not sticky. Currants and mixed fruit were weighed in a bowl and 1 tsp of flour was added. The fruit and flour were manually mixed to lightly coat the fruit surface. The fruit next was added to the dough in the Hobart bowl mixer and mixed at speed 1 for 1 minute. The paddle was removed and the dough slightly rounded. The dough was covered with a tea towel and left to ferment for 20 minutes. The dough was scaled on a cutting board into 50 g portions, covered with a tea towel and left to rest for 15 minutes. The dough was rounded and panned into a cake pan, the dough was covered with a tea towel and proofed for 90 minutes by placing the pan on warm stovetop.

A protein wash was prepared by mixing the canola protein isolate, salt and water. The surface of the dough was coated four times with protein washes using a pastry brush. The dough then was baked at 380°F (193°C) for 17 minutes.

The surface of the hot cross bun was golden coloured and shiny with a firm outer layer. No off colours nor off flavours were detected, even when the canola protein isolate was utilized at such a high level.

Example 11:

This Example illustrates the utilization of the canola protein isolate in the preparation of glazed dinner rolls in place of egg white conventionally used and illustrating film-forming properties.

Glazed dinner rolls were prepared from the formulation set forth in Table XI:

TABLE XI

| Roll Formulation | | |
|---|---|---|
| Ingredient | Batch Produced (g) | Percentage (%) |
| Water | 265.0 | 33.0 |
| All Purpose Flour | 430.0 | 53.5 |
| Skim Milk Powder | 9.9 | 1.2 |

(continued)

| Roll Formulation | | |
|---|---|---|
| Ingredient | Batch Produced (g) | Percentage (%) |
| Sugar | 46.6 | 5.8 |
| Salt | 5.1 | 0.6 |
| Butter | 40.0 | 5.0 |
| Yeast (Instant Active Dry) | 7.2 | 0. 9 |
| Total | 803.8 | 100.0 |
| Glaze Formulation | | |
| Ingredient | Batch Produced (g) | Percentage (%) |
| Canola Protein Isolate A8-02 | 12.0 | 21.3 |
| Salt | 0.3 | 0.7 |
| Water | 44.0 | 78.0 |
| Total | 56.3 | 100.0 |

Water was added to a bread pan (Westbend Automatic Bread and Dough Maker). The flour, milk powder, sugar and salt were added to the bread pan and the bread pan was gently tapped to level the ingredients. The butter was cut into four pieces and placed in each corner of the bread pan. A well was formed in the dry ingredients (prevent sugar exposure to yeast) and the yeast was added into the well. The bread machine was set to "Dough" setting (1 hour, 20 minutes) and the machine started and locked. When done, the dough was removed and placed on a floured cutting board, covered and let rest for 15 minutes. The dough was shaped into rolls (18), which were placed in a baking pan, covered and allow to rise (to twice its size) in a warm draft-free environment (60 minutes).

A protein wash was prepared by mixing the canola protein isolate, salt and water. The tops of the rolls were brushed four times with the protein wash using a pastry brush. The rolls then were baked at 350°F (177°C) for 18 minutes.

The surface of the diner rolls was shiny, glossy and golden brown with a firm outer layer. No off odours nor off flavours were detected even at this high concentration of canola protein.

Example 12:

This Example illustrates the utilization of the canola protein isolate in a cake doughnut in place of the egg white or whole egg conventionally employed and illustrating binding properties.

Cake doughnuts were prepared from the formulation set forth in the following Table XII:

TABLE XII

| Ingredient | Weight (g) | Percentage (%) |
|---|---|---|
| All Purpose Flour | 480.6 | 47.0 |
| Sugar, fine granulated | 217.7 | 21.3 |
| Baking powder | 16.2 | 1.6 |
| Salt | 3.0 | 0.3 |
| Cinnamon | 2.3 | 0.2 |
| Butter | 23.6 | 2.3 |
| Canola Protein Isolate A07-22 | 12.3 | 1.2 |
| Water | 90.3 | 8.8 |
| Milk, 2% | 176.5 | 17.3 |
| Total | 1022.5 | 100.0 |

A first amount of flour (50% of the total) sugar, baking powder, salt, cinnamon and canola protein isolate were placed into a Hobart mixing bowl. The ingredients were dry blended with a fork until all dry ingredients were evenly dispersed. The butter, water and milk next were added to the bowl. The mixture was blended for 30 seconds at speed 1 using the paddle attachment. The bottom and sides of the bowl and the paddle were scraped. The mixture was blended for 2 minutes at speed 2. During mixing the blender was stopped after 1 minute and the bottom and sides of the bowl and paddle were scraped. The remaining flour was added while blending at speed 1 for 1 minute.

The resulting dough was placed on a floured cutting board, kneaded into a ball, the surface of the ball floured and was rolled flat to ½ inch thickness using a rolling pin. The dough sheet was cut with a doughnut cutter and the doughnuts and holes were placed on parchment paper.

A fryer (SEB Safety Super Fryer Model 8208) was preheated to the set temperature of 374°F (190°C). The doughnuts were placed in the fryer basket and fried for 60 seconds each side. The fried doughnuts were placed on paper towels and layered on cooling racks.

The doughnuts had a golden brown colour and a smooth, even, exterior surface. The doughnuts were cake-like with a slightly crispy surface. The doughnuts had a sweet cinnamon flavour and exhibited no off flavours nor off odours.

Example 13:

This Example illustrates the utilization of the canola protein isolate in the preparation of battered vegetables and fish in place of the egg white conventionally employed and illustrating binding properties.

Battered vegetables and fish were prepared using a batter prepared from a formulation as set forth in Table XIII:

TABLE XIII

| Ingredient | Weight (g) | Percentage (%) |
|---|---|---|
| All Purpose Flour | 128.0 | 32.3 |
| Baking powder | 2.5 | 0.6 |
| Sugar | 4.8 | 1.2 |
| Salt | 2.7 | 0.7 |
| Milk, skim | 182.6 | 46.0 |
| Canola Protein Isolate A07-22 | 6.2 | 1.6 |
| Water | 45.8 | 11.5 |
| Shortening | 24.1 | 6.1 |
| Canola oil for frying | - | - |
| Total | 396.7 | 100.0 |

Onions were peeled and sliced into ¼ inch slices and separated into rings. Mushrooms and zucchini were washed and then the zucchini was cut into ¼ inch slices. Fish was cut into 2 inch strips.

Flour was manually mixed with protein, baking powder, salt and sugar. The mixture was dry blended thoroughly using a fork. Shortening was melted in a microwave oven for 45 seconds at level 8. Milk, water and melted shortening were combined and added to the dry ingredients. The mixture was blended manually until smooth.

The vegetable and fish pieces were dipped into the batter. A fryer basket was lowered into canola oil preheated to 374°F (190°C) and the battered pieces placed into the fryer oil. Each side was fried (onion rings and fish: 30 to 45 seconds each side, zucchini, mushrooms : 1 minute each side) and then removed from the fryer. The fried foods were placed onto paper towels to absorb oil.

The freshly battered and fried vegetables and fish pieces were golden brown coloured and crisp. The batter adhered to the pieces well. No off odours nor off flavours were detected.

Example 14:

This Example illustrates the utilization of the canola protein isolate in forming textured canola protein.

PMM BW-A16-L10-01A, prepared as described in Example 2, in wet form, was added to a 5 cc syringe and then extruded into water held at between (203°F) 95°C and (210°F) 99°C. Long spaghetti-like fibers formed along the surface of the water. The long protein strands were manually turned over in order to facilitate even heat treatment to both sides of the product. The strands were removed from the water and the excess water was removed using absorbent towels.

The fibers formed were long and elastic, golden yellow in colour with a bland taste and no characteristic aroma.

Example 15:

This Example illustrates the functional properties of the canola protein isolate as a binder in a mushroom burger in place of shell eggs.

Mushroom burgers were prepared from the formulations set forth in the following Table XIV:

TABLE XIV

| Ingredient | Weight (grams) | Percentage (%) |
|---|---|---|
| Mushrooms, diced | 170.5 | 51.5 |
| Canola oil | 10.9 | 3.3 |
| Onion, minced | 50.2 | 15.2 |
| Breadcrumbs | 53.4 | 16.1 |
| Canola protein isolate A6-C 1 | 4.7 | 1.4 |
| Water | 34.8 | 10.5 |
| Ground pepper | 0.3 | 0.3 |
| Garlic clove, crushed | 5.1 | 0.1 |
| Salt | 1.1 | 1.5 |
| Total | 331.0 | 100.0 |

The water and salt were mixed and the canola protein was blended in and the blend let sit for 15 minutes. The onion and garlic were sautéed in the oil in a frying pan for 2 minutes using a GE stove (setting 3/4). Mushrooms were added and cooked for 6 minutes on setting 4/5, stirring frequently until softened and all liquid had disappeared. The cooked mushroom mixture was cooled and combined manually with the remaining ingredients. The mixture was used to make approximately 100 g patties. The patties were cooked to an ambient temperature of 165°F (74°C) either in a frying pan (setting 2/3; 2 minutes per side) or on a barbecue (medium heat; 10 minutes per side).

The canola protein isolate produced an acceptable-formed patty. However, the patties had a mushy texture, slightly bitter off-taste and a more crumbly surface then a shell egg control, but nevertheless was acceptable. The patties made with the canola protein isolate maintained the integrity either when fried or barbecued. The canola protein isolate patty had a less weight loss (5.40%) than the control shell egg patty (4.70%).

Example 16:

This Example illustrates the functional properties of the canola protein isolate as a thickener in place of cornstarch and/or xanthan gum conventionally employed.

A caramel sauce was prepared from the formulations set forth in the following Table XV:

TABLE XV

| Ingredient | Weight (grams) | Percentage (%) |
|---|---|---|
| 2% Evaporated milk | 407.6 | 65.6 |
| PMM BW-AL016-L10-01A | 10.9 | 1.8 |
| Brown sugar | 75.6 | 12.2 |
| White sugar | 106.3 | 17.1 |
| Margarine | 15.0 | 2.4 |
| Vanilla extract | 5.9 | 0.9 |
| Total | 621.3 | 100.0 |

The canola protein isolate and sugars were dry blended. The evaporated milk, margarine and vanilla were gradually blended in. The mixture was added to vented double boiler and cooked to 88°C (190°F) and held for five minutes. The boiler then was removed from the heat, cooled, covered and refrigerated overnight.

The canola protein isolate produced a sauce with acceptable flavour and colour when compared to a control sauce prepared with cornstarch. The canola protein isolate produced a more viscous sauce (2848 cps) when compared to the control sauce prepared with cornstarch (1292 cps).

Example 17:

This Example illustrates the solubility of the canola protein isolate.

10 g of dry canola protein isolate A11-04, prepared as described in Example 1 was combined with 400 ml of distilled water in a 600 ml beaker to prepare a 2.5 wt% protein solution. The protein solution was blended by homogenizing for 2 minutes at 4500 rpm, until a smooth slurry was formed. The pH of the protein solution was determined and the solution split into equal volumes for pH adjustment, one for alkaline and the other for acid adjustment.

The pH of the protein solution was adjusted to 4.0, 4.5, 5.0, 5.5, 6.0, 6.5, 7.0, 7.5 and 8.0 with 0.1 M NaOH or 5% HCl. A small sample of each pH adjusted solution was collected for protein determination. 30 ml of the pH adjusted solutions were poured into 45 ml centrifuge vials and centrifuged for 10 minutes at 10,000 rpm. After centrifugation, the supernatant protein concentration for each of the pH adjusted samples was determined.

The % solubility of the protein was determined from the relationship:

$$\% \text{ Solubility} = \frac{\% \text{ protein after centrifugation}}{\% \text{ protein before centrifugation}} \times 100$$

The results obtained are set forth in the following Table XVI:

TABLE XVI

| pH | Average % Protein before Centrifugation ($\pm$ 0.2%) | Average % Protein after Centrifugation ($\pm$ 0.2%) | Average % Solubility |
|---|---|---|---|
| 4.0 | 2.13 | 1.90 | 89.20 |
| 4.5 | 2.11 | 1.78 | 84.35 |
| 5.0 | 2.18 | 1.25 | 57.34 |
| 5.5 | 0.60 | 0.08 | 13.23 |
| 6.0 | 0.06 | 0.02 | 33.33 |
| 6.5 | 0.20 | 0.06 | 30.00 |
| 7.0 | 0.29 | 0.27 | 93.10 |
| 7.5 | 0.77 | 0.78 | 101.29 |
| 8.0 | 1.53 | 1.45 | 94.77 |

As may be seen from the results in Table XV, the canola protein isolate was quite soluble at all pH's tested, the greatest solubility being at pH 4.0 to 4.5 and 7.0 to 8.0.

Example 18:

This Example illustrates the foaming properties of the canola protein isolate.

3.75 g of canola protein isolate BW-AL011-J16-01A, prepared as described in Example 2, was placed into a 250 ml beaker. 60 ml of 0.075 M NaCl solution was added to the protein a few ml at a time. After each addition, the protein solution was hand blended creating a paste initially that was slowly diluted into a fully suspended solution. The mixture was then placed on a magnetic stirrer and blended for an additional 10 minutes. The pH of the solution was adjusted to 7.00 with 0.1 M NaOH, and the solution stirred for another 10 minutes. The pH was readjusted to 7.00 and the volume of liquid was brought up to 75 ml with the required amount of 0.075 M NaCl to yield a 5% w/v protein solution.

The 75 ml solution was poured into a Hobart Mixer bowl and using the whisk attachment, blend at speed 3 for 5 minutes.

Sufficient foam was gently scooped out of the bowl using a rubber spatula into 2, tared, 125 ml dry cup measuring cups. Excess foam was scraped off using the flat edge of a metal spatula to level the top of the foam even with the top of the measuring cup. The weight of the foam was recorded. The foam was gently returned to the mixing bowl and whipped for an additional 5 minutes. Measurements were repeated, the foam was returned to the bowl and measurements were repeated again after 5 more minutes completing a total of 15 minutes of mixing and 3 consecutive overrun measurements.

The overrun was calculated from the following equation:

$$\% \text{ Overrun} = \frac{(\text{wt } 125 \text{ ml protein} - (\text{wt } 125 \text{ ml foam})}{(\text{wt } 125 \text{ ml foam})} \times 100$$

The stability of the foam was also tested. The protein solution was prepared in the same manner as described for the % overrun measurements except the protein solution was whipped continuously for 15 minutes on level 3. Using a rubber spatula, the foam was carefully transferred to a 1L long necked funnel placed on top of a 250 ml graduated cylinder. A small amount of quartz wool was placed in the top of the funnel spout prior to transferring the foam to prevent the foam from draining while still allowing drainage of the liquid.

The volume of liquid that was collected in the graduated cylinder at 5, 10 and 15 minutes was measured. The volume held in the wool was added to the final volume.

The experiments were repeated for comparison with egg albumen, a whey protein isolate (from Alacen) and a soy protein isolate (from Pro Fam). The results obtained are set-forth in the following Tables XVII, XVIII, XIX and XX:

TABLE XVII

| pH of Solution after Stirring | | |
|---|---|---|
| Protein Sample | pH after 10 minutes of stirring | pH after 20 minutes of stirring |
| Egg Albumen | 6.88 | 6.95 |
| Whey | 6.49 | 6.98 |
| Soy | 7.13 | 7.01 |
| PMM | 6.44 | 6.95 |

TABLE XVIII

| Average Weight of Foam | | | |
|---|---|---|---|
| Protein Sample | 5 minutes (g) | 10 Minutes (g) | 15 Minutes (g) |
| Egg Albumen | 10.16 | 6.42 | 6.57 |
| Whey | 17.35 | 13.48 | 9.76 |
| Soy | 63.26* | 58.53* | 49.74* |
| PMM | 18.47 | 15.78 | 23.62 |
| * Only one weight could be obtained because did not whip well. | | | |

TABLE XIX

| Average of Overrun | | | |
|---|---|---|---|
| Protein Sample | 5 minutes (%) | 10 Minutes (%) | 15 Minutes (%) |
| Egg Albumen | 1130.32 | 1847.04 | 1802.59 |
| Whey | 620.46 | 827.30 | 1180.74 |
| Soy | 97.60 | 113.57 | 151.31 |

(continued)

| Average of Overrun | | | |
|---|---|---|---|
| Protein Sample | 5 minutes (%) | 10 Minutes (%) | 15 Minutes (%) |
| PMM | 576.77 | 692.15 | 877.77 |
| * Assume weight of 125 ml of protein solution is 125 g. | | | |

TABLE XX

| Volume of Protein solution Collected in Funnel | | | |
|---|---|---|---|
| Protein Sample | Drainage at 5 Min (ml) | Drainage at 10 Min (ml) | Drainage at 15 Min (ml) |
| Egg Albumen | 0.0 | 1.0 | 5.0 |
| Whey | 2.0 | 13.0 | 24.0 |
| Soy | N/A* | N/A* | N/A* |
| PMM | 13.0 | 30.0 | 42.9 |
| * The soy did not foam well. It plugged the wool with a gelatinous substance when poured into the funnel, and didn't drain out. Assume all 75 ml would drain out immediately. | | | |

As may be seen from the results of these Tables, the canola protein isolate created a nice foam. The considerable amount of drainage from the foam after 15 minutes indicated a lack of foam stability for the canola protein isolate.

Example 19:

This Example illustrates the oil holding capacity of the canola protein isolate.

The recipe set forth in Table XXI was used to prepare an emulsion:

TABLE XXI

| Ingredient | Percentage of Recipe (%) | Weight Added (g) |
|---|---|---|
| Protein | 0.11 | 0.50 |
| Vinegar (No Name 5% acetic acid) | 12.27 | 55.22 |
| Canola Oil (CSP Foods) | Unknown | Unknown |
| Sugar (Rogers fine granulated | 9.10 | 4.095 |
| Salt (Sifto) | 0.27 | 1.22 |
| Distilled Water | 11.65 | 52.43 |

The sugar, salt and canola protein isolate, BW-AL011-J16-01A prepared as described in Example 2, were dry blended in a 600 ml beaker. The water and vinegar were mixed and added to the protein a few ml at a time. After each addition, the protein solution was hand blended to create a paste initially that was slowly diluted into a fully suspended solution. The mixture was then placed on a magnetic stirrer and blended for 5 minutes. A 2000 ml beaker was filled with canola oil and the weight recorded. A suction hose was placed in the oil.

The dispensing end of the hose was attached to a homogenizer and the pump was primed with oil using setting #1 to dispense approximately 40 to 50 ml/min. At the same time, the homogenizer was turned to 5000 rpm and the pump switched on to disperse the oil. The point at which the emulsion was most viscous was visually observed. At the point of inversion the pump and homogenizer were immediately switched off. The end of the suction hose was pinched with a clip to keep the oil in it and the weight of oil left in the 200 ml beaker was determined.

The experiment was repeated using egg yolk, xanthan gum (from Kelco Biopolymers) and soy protein isolate (from SPI Group). The average oil holding capacity of the emulsions were determined for the various protein sources and the results obtained are set forth in the following Table XXII:

TABLE XXII

| Sample | Weight of Oil Added (g) | Volume of Oil Added (ml) |
|--------|-------------------------|--------------------------|
| Yolk | 163.07 | 146.93 |
| Xanthan | 88.09 | 79.37 |
| Soy | 91.50 | 82.44 |
| PMM | 213.47 | 192.34 |

As may be seen from the results set forth in Table XXI, the canola protein isolate performed significantly better than xanthan gum and soy for oil holding capacity.

SUMMARY OF DISCLOSURE

In summary of this disclosure, the present invention provides a variety of food products where proteins used to provide a wide variety of functionalities are replaced, wholly or partially, by a highly purified canola protein isolate produced according to the process defined by the claims. Modifications are possible within the scope of the invention which is defined by the claims.

**Claims**

1. A process of forming a food composition, which comprises:

extracting canola oil seed with an aqueous food-grade salt solution at a temperature of at least 5 °C to cause solubilisation of protein in the canola oil seed meal and to form an aqueous protein solution having a protein content of 5 to 30 gl$^{-1}$ and a pH of 5 to 6.8;
reducing the volume of the aqueous protein solution using ultrafiltration membranes to provide a concentrated protein solution having a protein content in excess of 200 gl$^{-1}$;
diluting the concentrated protein solution into chilled water having a temperature below 15 °C to form a cloud of protein micelles;
settling the protein micelles to form an amorphous, sticky, gelatinous, gluten-like micellar mass;
removing the supernatant;
drying the precipitated viscous sticky mass to provide a substantially undenatured canola protein isolate having a protein content of at least 100 wt% as determined by Kjeldahl nitrogen x 6.25;
providing a food composition comprising a foodstuff and said substantially undenatured canola protein isolate as a component providing functionality in said food composition.

2. A process as claimed in claim 1, wherein said protein isolate contributes to the food composition as soluble protein or to provide foaming, film forming, water binding, cohesion, thickening, gelation, elasticity, emulsification, fat binding or fibre forming functionality.

3. A process as claimed in claim 2, wherein said protein isolate is incorporated in said food composition in substitution for egg white, milk protein, whole egg, meat fibres, or gelatin.

**Patentansprüche**

1. Verfahren zur Bildung einer Nahrungsmittelzusammensetzung, wobei das Verfahren umfasst:

Extrahieren von Canolaölsamen mit einer wässrigen Salzlösung in Lebensmittelqualität bei einer Temperatur von mindestens 5°C, um eine Proteinauflösung in dem Canolaölsamenmehl zu bewirken und um eine wässrige Proteinlösung zu bilden, die einen Proteingehalt von 5 bis 30 gl$^{-1}$ und einen pH von 5 bis 6,8 aufweist;
Reduzieren des Volumens der wässrigen Proteinlösung unter Verwendung von Ultrafiltrationsmembranen, um eine konzentrierte Proteinlösung bereitzustellen, die einen Proteingehalt von mehr als 200 gl$^{-1}$ aufweist;
Verdünnen der konzentrierten Proteinlösung in gekühltes Wasser, das eine Temperatur von unter 15°C aufweist, um eine Proteinmicellenwolke zu bilden;

Absetzenlassen der Proteinmicellen, um eine amorphe, klebrige, gelatinöse, gluten-artige micellare Masse zu bilden;

Entfernen des Überstandes;

Trocknen der ausgefällten viskos klebrigen Masse, um ein im Wesentlichen nicht denaturiertes Canolaproteinisolat bereitzustellen, das einen Proteingehalt, bestimmt mittels Kjeldahl-Stickstoff x 6,25, von mindestens 100 Gew.-% aufweist;

Bereitstellen einer Nahrungsmittelzusammensetzung, umfassend ein Nahrungsmittel und das im Wesentlichen nicht denaturierte Canolaproteinisolat als eine Funktionalität bereitstellender Bestandteil in der Nahrungsmittelzusammensetzung.

**2.** Verfahren beansprucht wie in Anspruch 1, wobei das Proteinisolat zur Nahrungsmittelzusammensetzung als lösliches Protein beiträgt oder um schäumende, filmbildende, wasserbindende, kohärente, verdickende, gelierende, elastische, emulgierende, fettbindende oder faserbildende Funktionalität bereitzustellen.

**3.** Verfahren wie beansprucht in Anspruch 2, wobei das Proteinisolat in die Nahrungsmittelzusammensetzung an Stelle von Eiweiß, Milchproteinen, Vollei, Fleischfasern oder Gelatine eingearbeitet ist.

**Revendications**

**1.** Procédé de formation d'une composition alimentaire, lequel comprend :

l'extraction de graines oléagineuses de canola avec une solution saline aqueuse de qualité alimentaire à une température d'au moins 5°C pour occasionner une solubilisation de protéines dans la farine de graines oléagineuses de canola et pour former une solution aqueuse de protéines ayant une teneur en protéines de 5 à 30 $gl^{-2}$ et un pH de 5 à 6,8 ;

la réduction du volume de la solution aqueuse de protéines en utilisant des membranes d'ultrafiltration pour fournir une solution de protéines concentrée ayant une teneur en protéines excédant 200 $gl^{-1}$ ;

la dilution de la solution de protéines concentrée dans de l'eau refroidie ayant une température inférieure à 15°C pour former un nuage de micelles de protéines ;

le dépôt des micelles de protéines pour former une masse micellaire semblable à du gluten, gélatineuse, collante, amorphe ;

l'élimination de la matière surnageante ;

le séchage de la masse collante visqueuse précipitée pour fournir un produit isolé de protéines de canola pratiquement non dénaturé ayant une teneur en protéines d'au moins 100 % en poids comme déterminée par l'azote de Kjeldahl x 6,25 ;

la fourniture d'une composition alimentaire comprenant des denrées alimentaires et ledit produit isolé de protéines de canola pratiquement non dénaturé comme constituant fournissant une fonctionnalité dans ladite composition alimentaire.

**2.** Procédé selon la revendication 1, dans lequel ledit produit isolé de protéines contribue à la composition alimentaire en tant que protéines solubles et fournit une fonctionnalité de formation de mousse, de formation de film, de liaison à l'eau, d'adhérence, d'épaississement, de gélification, d'élasticité, d'émulsion, de liaison de graisse ou de formation de fibres.

**3.** Procédé selon la revendication 2, dans lequel ledit produit isolé de protéines est incorporé dans ladite composition alimentaire en substitution du blanc d'oeuf, de protéine de lait, d'oeuf entier, de fibres de viande ou de gélatine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60288434 B
- US 60330731 B
- US 5844086 A
- US 6005076 A
- US P4208323 A, Murray IB
- US 4208323 A
- US P4208303 A
- US 4169090 A
- US 4285862 A, Murray IA

- US 60288415 B
- US 60326987 B
- US 60331066 B
- US 60333494 B
- US 60331646 B
- US 4328252 A
- US 4490397 A
- US 4501760 A

**Non-patent literature cited in the description**

- Food Chemistry. Marcel Dekker, Inc, 1996, 366